# EUROPEAN PATENT SPECIFICATION

(11) **EP 1 585 282 B1**
(45) Date of publication and mention of the grant of the patent: **26.07.2006**
(21) Application number: 04252119.5
(22) Date of filing: 08.04.2004
(51) Int. Cl.: H04L 29/06

(54) **Message send queue reordering based on priority**
Auf priorität basiertes Wiedereinordnen in einer Sende-Warteschlange von Nachrichten
Réorganisation des messages dans une file d'attente de transmission en fonction de la priorité

(43) Date of publication of application: 12.10.2005
(73) Proprietor: Research In Motion Limited, Waterloo, Ontario N2L 3W8 (CA)
(72) Inventor: Tapuska, David, Waterloo Ontario N2T 2T7 (CA); Knowles, Michael, Waterloo Ontario N2T 2X5 (CA)
(74) Representative: Rickard, David John

(56) References cited:
- WO-A-03/085924
- GB-A- 2 360 675
- LILJEBERG M ET AL: "Optimizing World-Wide Web for weakly connected mobile workstations: An indirect approach" SERVICES IN DISTRIBUTED AND NETWORKED ENVIRONMENTS, 1995., SECOND INTERNATIONAL WORKSHOP ON WHISTLER, BC, CANADA 5-6 JUNE 1995, LOS ALAMITOS, CA, USA,IEEE COMPUT. SOC, 5 June 1995 (1995-06-05), pages 132-139, XP010148055 ISBN: 0-8186-7092-4
- HANDLEY M ET AL: "RFC 2543: SIP: SESSION INITIATION PROTOCOL"[Online] March 1999 (1999-03), XP002292127 Retrieved from the Internet: URL:http://www.ietf.org/rfc/rfc2543.txt?nu mber=2443> [retrieved on 2004-08-12]
- TSUJI J ET AL: "Proposal for transfer error recovering on broadcasting network" PARALLEL PROCESSING, 1999. PROCEEDINGS. 1999 INTERNATIONAL WORKSHOPS ON AIZU-WAKAMATSU, JAPAN 21-24 SEPT. 1999, LOS ALAMITOS, CA, USA,IEEE, US, 21 September 1999 (1999-09-21), pages 126-130, XP010356027 ISBN: 0-7695-0353-5

## Description

The present invention relates to a method and system for reordering a message send queue based on a priority of the message to be sent.

Mobile devices such as wireless communication devices providing voice communications, data communications or both in a wireless communication network are increasingly prevalent in modem society. Such devices may also provide additional personal digital assistant (PDA) functions such as a calendar, alarm, contact lists, calculators, etc. One common feature of such devices is a World Wide Web browser facility whereby a user may navigate web pages such as those made available through an intranet or the public Internet.

During a browsing experience, a web browser acquires web page data to render the web page on a display of the device. The web browser formulates requests for data using a protocol such as the Hyper Text Transfer Protocol (HTTP) for requesting data from a web page server. In a wireless device, the requests and responses are typically communicated between the wireless device and the web page server through an intermediate server providing gateway services, bridging communications between the wireless network and the network of the web page server.

The gateway receives the requests from the wireless device and forwards them to the web server for service. Responses from the web server are received by the gateway and queued for communication to the wireless device.

To obtain the data for a single web page, a browser is often required to formulate more than one request. Occasionally, a response for a second request is required to be received and processed before the response for an earlier request is fully processed by the wireless device. When such a secondary HTTP request is made to the server while the communication of a response to an earlier request may be pending or in progress, the gateway sends any data that it has in its send queue until the entire response of the first request is completed. As a result, the web browser is delayed in receiving the response to the secondary request until it receives the entire response to the earlier request.

By way of an example, a browser of the wireless device may encounter a JavaScript™ source or cascading style sheet (css) reference in a response while loading a web page. Such references require immediate action. The browser is required to fetch the data for the reference, via a second request. It is also required to pause any further rendering of the page for any response data it may have until the new reference is completed. However, the send queue of the gateway may contain the remainder of the response to the first request while it receives the response to the second request. Send queues operate in accordance with first in first out (FIFO) rules. As such, the gateway puts the response to the second request at the end of its queue for sending after it completes the sending of the first response. Though such a manner of FIFO operation in a queue serializing response data is often desirable, it is apparent there are situations were a different ordering of communications may be required. When a secondary response requiring immediate action itself comprises a reference requiring immediate action, the delay experienced may be further compounded. As a result, a satisfying user experience may be affected. Web page loading times appear to lengthen when incomplete screens are displayed while waiting for additional data.

WO03085934A1 discloses a method of transferring additional Hyper Text Mark up Language (HTML) code objects from a server to a client device in response to further client device requests initiated by the presence of the additional objects in an HTML code object provided to the client device by the server in response to a first request. The server determines the priorities for the additional HTML code objects among the further requests from the client. The server then delays or forwards each additional object in dependence on its respective priority. The method disclosed in WO0308934A1 operates at the Transport Control Protocol (TCP) level and, as such, does not order, i.e. reorder, data already placed in the server's message send queue.

A solution to one or more of these shortcomings is therefore desired.

Therefore, there is a need for a method and system whereby a first device (e.g. a wireless handheld device or mobile station) may send a request to a second device (e.g. a wireless gateway server or other server) for response data having a higher priority than response data for an earlier request which is still transferring to the first device from the second device. Further there is a need for a second device (e.g. the server) to process the prioritized requests accordingly, inserting the higher priority response data into a content stream that the second device is transmitting to the first device, pre-empting any earlier lower priority response data that may already be queued.

Accordingly, the present invention provides in one main aspect a method of ordering a message send queue in a server sending respective response data to a wireless communication device in response to a plurality of requests from the wireless communication device, the method comprising the steps of: placing data comprising a response to a first request in the send queue and serially transmitting the data in said send queue to the wireless device; receiving data comprising a response to a second request, said second request being determined to have a respective relative priority that is higher than a priority of the first request; and placing some of the data comprising the response to the second request in the send queue ahead of at least some of the data comprising the response to the first request still in the queue and serially transmitting the data in said send queue to the wireless device.

Preferably, to accommodate a need for multiple levels of priority, a multi-level priority mechanism is desired whereby higher-priority responses pre-empt any lower-priority responses in a response queue.

In accordance with an embodiment of the invention, an HTTP header for a send request is adapted to include a priority indication of the request's relative priority (e.g.: x-rim-priority-request "priority number"). The priority indication instructs a gateway to order the response data for the request so that the response data for the request arrives at the requesting device ahead of lower priority response data that may be in the gateway's send queue.

These and other aspects including one or more method aspects and computer program product aspects will be apparent to those of ordinary skill in the art.

### BRIEF DESCRIPTION OF THE DRAWINGS

In order that the invention may be readily understood, embodiments of the invention are illustrated by way of examples in the accompanying drawings, in which:
Fig. 1 is a schematic diagram of a system architecture in accordance with an embodiment of the invention;
Fig. 2 is a detailed diagram of a preferred wireless communication device of FIG. 1 in accordance with an embodiment of the invention;
Figs. 3A and 3B are flowcharts of operations of a mobile device in accordance with an embodiment of the invention illustrating a method for including a priority with a request for data; and
Fig. 4 is an illustration of a wireless gateway server in accordance with an embodiment of the invention.

### Description of Preferred Embodiments

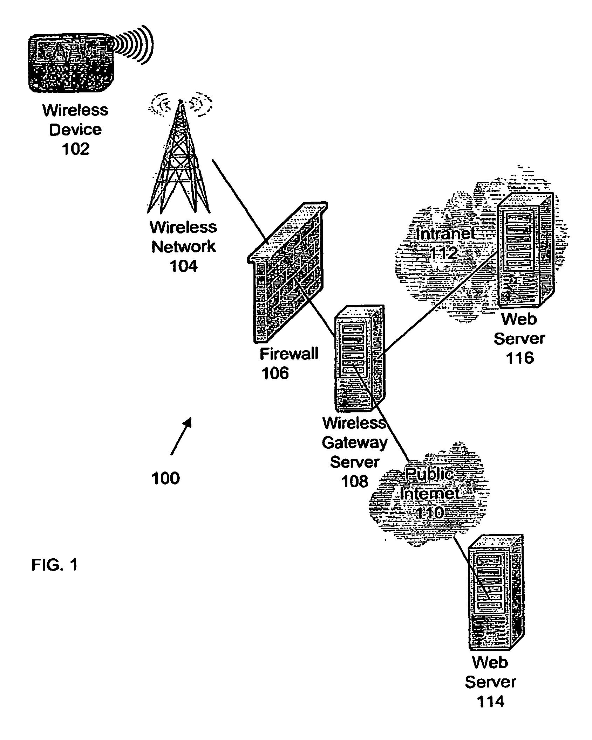

FIG. 1 is a schematic illustration of an architecture for a system 100 in accordance with an embodiment of the invention. System 100 comprises a wireless communication device 102 coupled for communicating wirelessly with a wireless network 104 symbolized by a base station. Wireless network 104 may conform to any of the wireless network technologies and protocols capable of supporting data communications including cellular, wide-area network, GSM, GPRS, CDMA, iDEN™, Mobitex™, etc. Wireless communication device 102 is adapted for web browsing and is capable of sending HTTP requests for web page data and receiving responses thereto comprising response data through wireless network 104 in accordance with one or more protocols implemented by the network 104. Wireless network 104 is further coupled for communication to a wireless gateway server 108 providing data communications services to the wireless device 102. In the present embodiment, wireless gateway server 108 is configured behind a firewall 106 well-known to those skilled in the art. Though not shown, intermediate wireless gateway server 108 and wireless network 104 may be a public relay and a public network such as the Internet. Wireless gateway server 108 may include but is not limited to a BlackBerry™ Enterprise Server or a wireless application protocol (WAP) gateway.

Through wireless gateway server 108, wireless device 102 may be coupled for communication over a network such as the public Internet 110 or an intranet 112 to a content server such as web servers 114 and 116.

In the illustrated embodiment of this invention, the wireless device 102 sends an HTTP request (i.e. a GET) for service by web server 114 or 116 through the firewall 106, to wireless gateway server 108. The wireless transport gateway is configured to provide access (i.e. HTTP connectivity), which is preferably secure, to intranet 116 and the public Internet 114. The wireless gateway server 108 performs the necessary address and protocol translation to route data between the wireless and IP networks. Optionally and preferably for handheld wireless devices such as device 102, the wireless gateway may convert and process data that passes between a content server, such as web server 114, 116, and an application resident on wireless device 102. Gateways may perform custom filtering and other data functions to deliver content to handhelds in an efficient and appropriate format.

Wireless gateway server 108 routes communications from the wireless device 102 (e.g. a GET) to the appropriate web server on the appropriate network. Once a response including response data (e.g. a portion of a web page such as part of an Hyper Text Markup Language (HTML) file) is returned to the gateway 108, the gateway prepares the response data for the appropriate wireless protocol of wireless network 104. The gateway 108 puts the response data, typically in a packet form according to a protocol of the wireless network, in a send queue for communicating to the wireless device 102 via the firewall and network 104.

In accordance with the present embodiment, the wireless device 102 is adapted to include in an HTTP request a priority indication for instructing a priority handling by the gateway, at least for some requests. As well, the gateway is adapted to prioritize the return of response data in accordance with the priorities of the requests the gateway receives.

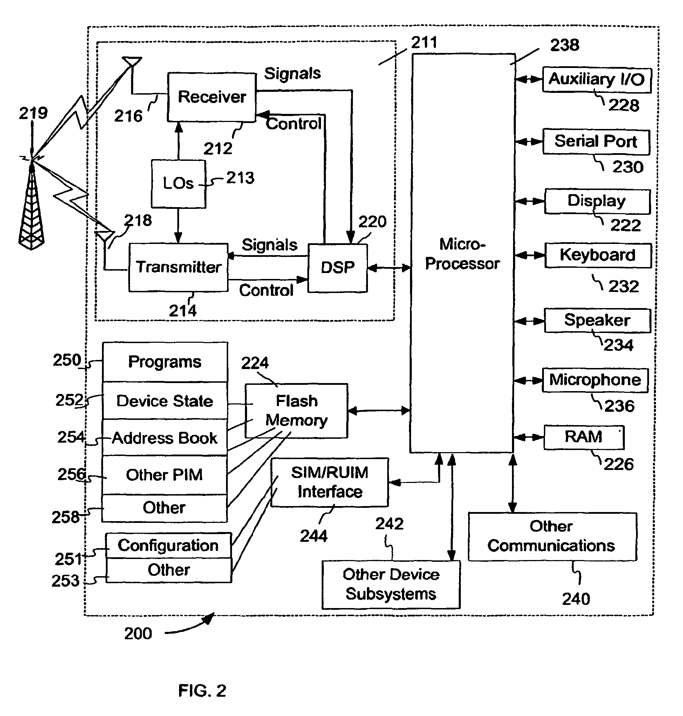

FIG. 2 is a block diagram illustrating an embodiment of wireless communication device 104 comprising a mobile electronic device 200 including preferred embodiments of the apparatus and method of the current application. Mobile electronic device 200 is preferably a two-way wireless electronic communication device having at least voice and data communication capabilities. Mobile electronic device 200 preferably has the capability to communicate with other computer systems on the Internet. Depending on the specific functionality provided, the wireless device may be referred to as a data messaging device, a two-way pager, a wireless e-mail device, a cellular telephone with data messaging capabilities, a wireless Internet appliance, or a data communication device, as examples.

Where mobile electronic device 200 is enabled for two-way communication, it incorporates a communication antenna subsystem 211, including both a receiver 212 and a transmitter 214, as well as associated components such as one or more, preferably embedded or internal, antenna elements 216 and 218, local oscillators (LOs) 213, and a processing module such as a digital signal processor (DSP) 220. As will be apparent to those skilled in the field of communications, the particular design of the communication subsystem 211 is dependent upon the protocols of the wireless communications network in which the device 200 is intended to operate.

Mobile electronic device 200 preferably includes a microprocessor 238 that controls the overall operation of the device. Communication functions, including at least data and preferably voice communications, are performed through communication subsystem 211. Microprocessor 238 also interacts with further device subsystems such as the display 222, flash memory 224, random access memory (RAM) 226, auxiliary input/output (I/O) subsystems 228, serial port 230, keyboard 232, speaker 234, microphone 236, a short-range communications subsystem 240 and any other device subsystems generally designated as 242.

Flash memory 224 may provide a local store of instructions and data of one or more applications for adapting and configuring the microprocessor to provide various features such as PDA features, a web browser, games, etc. A preferred application that may be loaded onto mobile station 202 may be a personal information manager (PIM) application having the ability to organize and manage data items relating to the user such as, but not limited to, instant messaging (IM), e-mail, calendar events, voice mails, appointments, and task items. Thus flash memory 224 of the present embodiment stores programs 250 (e.g. a web browser, PIM) device state information 252, address book 254, other PIM data 256, and other data and/or instructions 258.

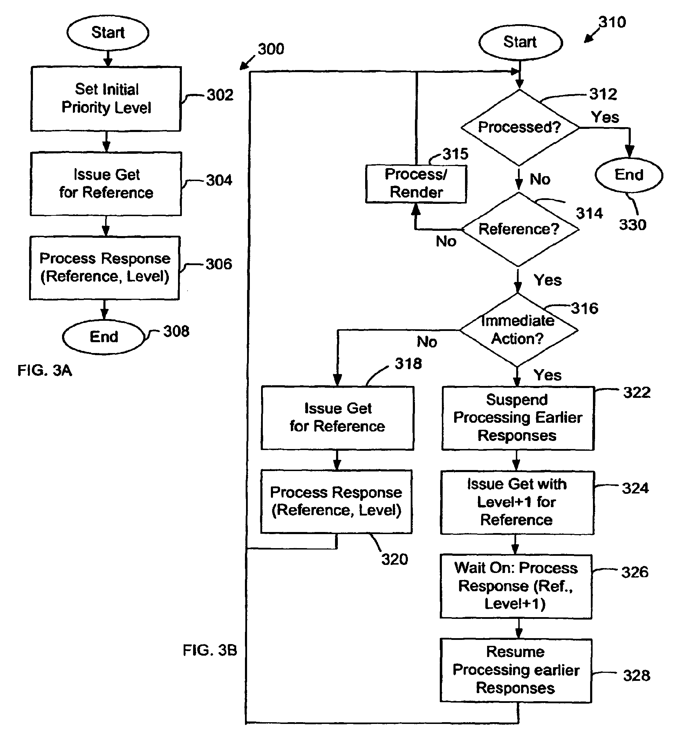

Figs. 3A and 3B illustrate flowcharts of operations of a mobile wireless device (e.g. device 102) in accordance with an embodiment of the invention illustrating a method for including a priority with a request for data. Operations 300 and 310 represent exemplary steps for an embodiment of a browser application for loading web pages. Persons of ordinary skill in the art will appreciate that other applications requesting data may be adapted in a similar manner.

Operations 300 are initiated on the start of a loading of a page. At step 302 an initial priority level is set. The level may be sent with a request for data, for example as part of an HTTP header, as would be understood to a person of ordinary skill in the art. In accordance with the present embodiment of the invention, the priority level is included in requests the responses for which require priority treatment by the gateway but is otherwise omitted from other requests. When a priority level is omitted, the respective responses are given a normal treatment by the gateway (i.e. a respective low priority treatment) and placed at a tail end rather than a head end of the FIFO send queue.

At step 304, a first request for web page data is issued to the gateway to request a response and thereafter at step 306 a process for handling the response to the request is started together with the current priority level. Operations 300 may then end 308.

Operations 310 represent a method for handling a response to a request which may be implemented in accordance with various well-known techniques such as objected-oriented programming and re-entrant coding techniques for programming a processor for handling the response data. At step 312, processing begins to act upon the response data, for example, to render the response on a display of the device. Persons of ordinary skill will appreciate that the response data is typically received as a stream of data in one or more packets and the response is typically processed serially in portions. Hence, as the stream is received, it is processed and a determination is made (step 312) whether the processing of the complete response is complete. If it is not complete, via No branch to step 314, the response is evaluated for a reference requiring a further request for data from a content source such as a web server. If a reference is not found, the portion of the response may be acted on, for example, to render the portion of data on a display of the device (step 315) before looping to step 312.

In the present embodiment relating to processing HTML, a variety of types of references may be encountered that require or otherwise may benefit from an immediate request for the matter identified by the reference. As previously discussed, css and JavaScript™ are examples of such references. However, those of ordinary skill in the art will appreciate that references defining other embedded media within a page may be included. The embodiment disclosed herein is useful when making a determination as to whether or not to render matter identified by an HTML reference; and when that determination changes the path to be taken for processing the rest of the HTML page. For example if an object tag inside an HTML page is encountered, a determination as to whether the device can render that item is to be made. Before the determination is made, it may be necessary to fetch the data.

Object tags may reference a variety of media such as Shockwave-flash, scalable vector graphics (svg), images, and other forms of media. Now typically rendering agents pre-allocate display space for the object and render additional portions of the pate, going back to adjust the content that was rendered if the object that is fetched can't be processed. However, a rendering agent could also fetch the object and wait for it and then continue processing once a response is received.

If a reference is found at step 314, a further determination is made whether action on the reference is to be immediately taken (step 316). If action is to be immediate, processing of responses on outstanding requests is suspended (step 322). At step 324 a Get request is sent with the priority level increased by one. A process for handling the response is started and the current level plus one is passed to initiate the process. The current process (i.e. current instance of operations 310) then waits on the processing of the response data for the higher priority reference (step 326). Once that other process response instance (i.e. new instance of operations 310) started by step 326 completes, the current process resumes operations, starting the processing of earlier response (step 328), if any, and looping to step 312 for a further determination whether more response data of the current response requires processing.

If at step 316 it is determined that the further reference in the current response docs not require immediate action, via No branch to step 318, a request for data identified by the new reference is sent without a priority level and a process initiated to handle a response for the new reference. Processing of the current response then continues at step 312.

If at step 312 no further response data requires processing, operations 310 end at step 330.

Consider operations 300 and 310 with reference to the pseudo-code block below for a sample web page defined by MainDocument.htm:

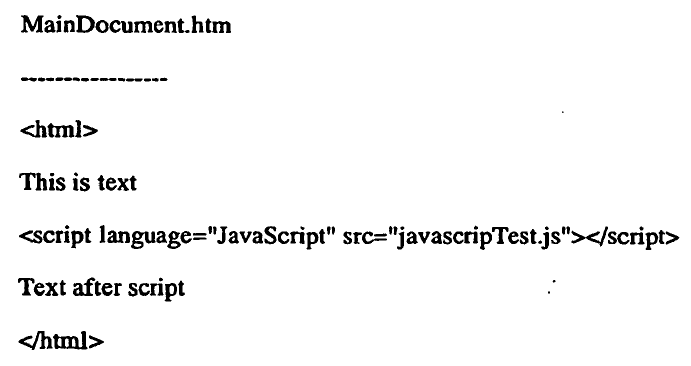

Operations 300 commence for loading page MainDocument.htm. The initial priority level may be set (e.g. 0) and at step 304 a GET issued for MainDocument.htm to a web server hosting the page. At step 306, a process (i.e. operations 310) is initiated for handling a response to the request. The current priority level is provided to initiate the level of priority of these operations.

In response to the packets of data received comprising MainDocument.htm, operations 310 process the data. At step 314, the reference JavaScriptTest.js is determined and at step 316 evaluated as a reference requiring immediate action. Processing of response data is suspended, and a GET for the reference is issued (steps 322-324). The GET includes the initial priority level increased by 1 (e.g. 1) in a header portion of the request. The priority may be identified by a reference such as "x-rim-request-priority". At step 326 the current process waits until another instance of operations 310 complete the processing of a response for the reference JavaScriptTest.js. The initial priority level plus 1 is provided to initiate the other process.

The following workflow exchange represents an exchange between mobile device 102 and gateway 108 for the above web page:
---> GET MainDocument.htm
<--- First packet of MainDocument.htm
---> Get JavaScriptTest.js (with x-rim-request-priority=1)
<--- First packet of JavaScriptTest.js
<--- Last packet of JavaScriptTest.js
<--- Last packet of MainDocument.htm

Consider operations 300 and 310 with reference to the pseudo-code blocks below for a sample web page defined by MainDocument.htm, Script1.js and Script2.js:

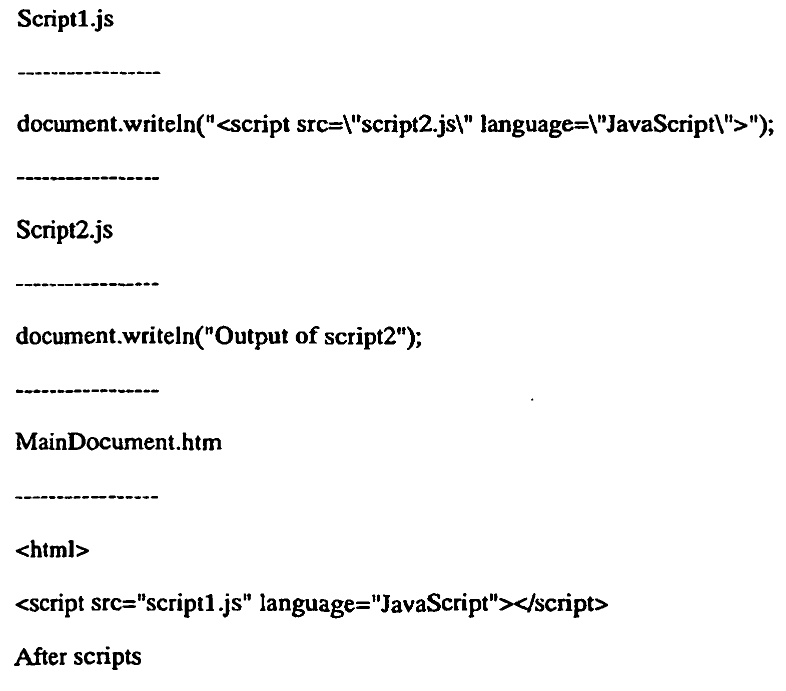

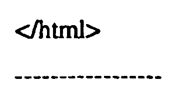

During rendering of MainDocument.htm, device 102 must first fetch "Script1.js" (priority level 1) and execute it; but during the execution of "Script1.js" it must also fetch "Script2.js" (priority level 1). As such operations 310 for Script1.js issue a GET for Script2.js having a priority level 2 and initiate a further instance of operations 310 at that priority level to process the response. The following workflow exchange represents message data flow between mobile device 102 and gateway 108 for the second above web page:
---> GET MainDocument.htm
<--- First packet of MainDocument.htm
---> Get Script1.js (with x-rim-request-priority=1)
<--- First packet of Script1.js
---> Get Script2.js (with x-rim-request-priority=2)
<--- First packet of Script2.js
<--- Last packet of Script2.js
<--- Last packet of Script1.js
<--- Last packet of MainDocument.htm

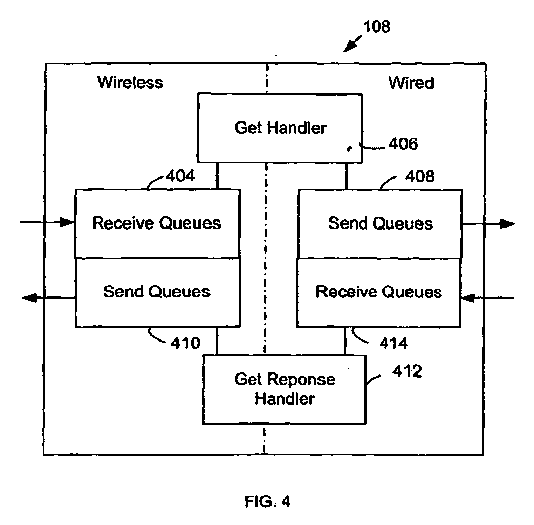

Fig. 4 illustrates a wireless transport gateway server 108 in accordance with an embodiment of the invention. Gateway server 108 comprises message receive queues 404 and send queues 410 for communicating with a plurality of wireless devices, such as device 102. Typically, there is a receive and send queue instance for each connection to a wireless device with which gateway 108 is communicating. An individual wireless device typically communicates via a single connection to the gateway. Thus all communications are serialized in a FIFO manner in accordance with the prior art.
Gateway 108 further comprises queues 408 and 414 for communicating with other devices coupled to gateway 108 such as web server 114 and 116. Gateway 108 further comprises a get handler 406 for processing GET requests from wireless devices, evaluating headers for priority levels and a get response handler 412 for processing responses, reordering data in respective queues 410 in response to the respective priority levels received.

Not shown, though understood to persons skilled in the art, are components of wireless gateway server 108 for maintaining connectivity between wireless devices and the gateway and translation components for communicating in accordance with various network protocols, for example, to pass data received in a wireless protocol to a server in a wired protocol and the converse thereof. Also not shown are components for routing communications between the particular devices for which the gateway provides its services.

In operation, gateway 108 receives GET requests for data and get handler 406 evaluates a header portion for a priority level, passing the request through to send to the appropriate web server. Responses received for the requests are handled by get response handler 412 in accordance with the priority level of the request as received. Data packets for a response to a request having no priority are placed at a tail end of the respective FIFO send queue for the device originating the request so that existing data in the queue is sent in accordance with FIFO rules. Data packets for a request having a higher priority are placed at a head end of the respective queue for the device originating the request, higher priority data being placed ahead of lower priority data, so that new data in the queue is sent in accordance with "last in first out" LIFO rules.

Though described herein with reference to a web browser application for navigating the Internet in accordance with a request/response protocol such as HTTP, for example, the present invention may be useful for other applications having a web page-like interface or for other communication protocols than HTTP.

The manner of reordering the queue could be done for various communication protocols. An alternative to including a priority indication in a header may be to add or otherwise include a byte for the priority in a message body portion of the stream, e.g. in a packet.

Benefits in accordance with a feature of the invention are better achieved when there is a relatively large amount of data in the send queue and a slower bandwidth communication between the queue and the receiving device. A disadvantage of the typical FIFO send queue sought to be overcome is that the send queue is so large that it will take a noticeable time for it to empty. Thus on faster communication networks, the send queue may not have much of a delay.

Persons of ordinary skill in the art will recognize that the priority does not necessarily have to advance by 1 for each request. If 2 items are encountered and their order of receipt is not important, two respective requests with the same priority may be sent and then the first response received by the gateway will be put in the queue first.

Consideration may be given to ensuring requests from the device do not time-out. Though not shown, it is common to time-out a connection if a response to a request is not received within a predetermined time. If a request is left too long without a packet being sent (e.g. after two minutes wait time on the device) then the connection will timeout. So it is desirable to periodically pre-empt the queue ordering and send something from responses in the queue that have "aged" (i.e. been delayed by higher-priority responses).

The above-described embodiments of the present application are intended to be examples only. Those of skill in the art may effect alterations, modifications and variations to the particular embodiments without departing from the scope of the application. The invention described herein in the recited claims intends to cover and embrace all suitable changes in technology.

## Claims

1. A method of ordering a message send queue (410) in a server (108) sending respective response data to a wireless communication device (102) in response to a plurality of requests from the wireless communication device, the method comprising the steps of:
placing data comprising a response to a first request in the send queue (410) and serially transmitting the data in said send queue to the wireless device (102);
receiving data comprising a response to a second request, said second request being determined to have a respective relative priority that is higher than a priority of the first request; and
placing some of the data comprising the response to the second request in the send queue (410) ahead of at least some of the data comprising the response to the first request still in the queue and serially transmitting the data in said send queue to the wireless device (102).

2. The method of claim 1, wherein it comprises the steps of:
receiving data comprising a response to a third request, said third request being determined to have a respective relative priority that is higher than the priority of the second request; and
placing some of the data comprising the third response in the send queue (410) ahead of at least some of the data comprising the response to the second request still in the queue and serially transmitting the data in the queue to the wireless device (102).

3. The method of claim 1 or 2, wherein it comprises periodically placing some of the data comprising the first response ahead of any data in the queue and serially transmitting the data in the queue to the wireless device (102) in order to avoid a timing out of a connection between the server (108) and the wireless device (102).

4. The method of any of claims 1 to 3, wherein determining a respective relative priority comprises evaluating a priority indication of a request, said priority indication defining the relative priority of the response data for that request.

5. The method of any of claims 1 to 4 further comprising receiving said plurality of requests wherein at least some of said requests comprise a respective priority indication for ordering the sending of their respective response data relative to other response data.

6. The method of any of claims 1 to 5 further comprising receiving the respective response data for sending via said message queue (410) in response to the respective request.

7. The method of any of claims 1 to 6, wherein the message queue comprises a first in first out (FIFO) queue and wherein ordering comprises placing the respective response data at one of the ends of the message queue in response to their respective relative priorities.

8. The method of any of claims 1 to 7, wherein the server (108) receives a priority indication for at least one of the requests from the wireless device (102).

9. The method of claim 8, wherein the server (108) receives a priority indication from the wireless device (102) for any request deemed to require immediate action.

10. The method of claim 9, wherein the priority indication received by the server (108) for each subsequent request requiring immediate action has a value comprising an incremented value of a last such request.

11. The method of any of claims 1 to 10, wherein the server (108) is a wireless gateway server and wherein the method comprises formatting the response data for transmitting in accordance with a wireless communications protocol.

12. A method of processing respective response data in a system comprising a server (108) and a wireless communication device (102), the response data being received in the wireless communication device (102) from the server (108) responding to a plurality of requests from the wireless device for the data, comprising the steps of:
at the wireless device (102), sending a first request for data to said server (108);
at the server, placing data comprising a response to a first request in a message send queue (410) and serially transmitting the data in said send queue to the wireless device (102);
at the wireless device, processing data being received comprising a response to said first request;
at the wireless device, sending a second request for data to said server, said second request being sent with a respective relative priority that is higher than a priority of the first request;
at the server, receiving data comprising a response to the second request, said second request being determined to have a respective relative priority that is higher than a priority of the first request;
at the server, placing some of the data comprising the response to the second request in the send queue (410) ahead of at least some of the data comprising the response to the first request still in the queue and serially transmitting the data in said send queue to the wireless device;
at the wireless device, serially receiving data comprising a response to said second request, some of said data comprising a response to said second request being serially received ahead of at least some of the data comprising the response to the first request;
at the wireless device, processing the response data for the second request; and, once processing of the response data for the second request is completed at the wireless device, completing processing of the response data for the first request.

13. The method of claim 12, wherein it comprises the steps of:
sending a third request for data to said server (108) from the wireless device;
said third request being sent with a respective relative priority that is higher than the priority of the second request;
serially receiving data comprising a response to said third request at said wireless device, some of said data comprising a response to said third request being serially received ahead of the data comprising the response to the second request;
processing the response data for the third request at the wireless device; and, once processing of the response data for the third request is completed at the wireless device, completing processing of the response data for the second request.

14. The method of claim 12 or 13, wherein it comprises periodically receiving some of the data comprising the first response ahead of the data comprising the second response at the wireless device and processing said periodically received data in order to avoid timing out of a connection between the server (108) and the wireless device (102).

15. The method of any of claims 12 to 14, wherein the wireless device (102) assigns a priority indication to any request deemed to require immediate action.

16. The method of claim 15, wherein the wireless device (102) assigns to each subsequent request deemed to require immediate action a priority indication comprising an incremented value of a last such request.

17. The method of any of claims 12 to 16, wherein the wireless device (102) sends the priority indication in a header portion of the request.

18. The method of any of claims 12 to 17, wherein determining a respective relative priority comprises evaluating a first portion of the first response data to determine the second request for the second respective response data having a higher priority than a remaining portion of the first respective response data and defining the respective relative priority in response to the higher priority.

19. The method of any of claims 12 to 18, further comprising suspending processing of said first respective response data at the wireless device until the processing of the second respective response data is complete.

20. A system comprising a server (108) and a wireless communication device (102), the server communicating with the wireless communication device via a wireless gateway (108) in a wireless network (104) part of a communications system (100), the wireless communication device and wireless gateway communicating serially in accordance with a request/response protocol, wherein the server comprises:
a processor coupled to the communication system (100) for processing a plurality of requests from the wireless communication device (102) and sending respective response data to said device via the gateway (108), said plurality of requests having respective relative priorities; and
a memory coupled to the processor for storing instructions to configure the processor to order a server message send queue (410) to:
place data from the server (114, 116) comprising a response to a first request in the send queue (410) and serially transmit the data in said send queue to the wireless device (102);
receive data from the server (114, 116) comprising a response to a second request, said second request being determined to have a respective relative priority that is higher than a priority of the first request; and
place some of the data comprising the response to the second request in the send queue (410) ahead of at least some of the data comprising the response to the first request still in the queue and serially transmitting the data in said send queue to the wireless device (102)the wireless communication device (102) comprising: and
wherein the wireless device comprises:
a communication system (211) for transmitting and receiving via the wireless
network (104);
a processor (238) coupled to the communication system (211) for sending requests and processing respective response data; and
a memory (224) coupled to the processor and storing instructions to configure the processor to send a priority indication in association with a request for particular response data to denote a priority of the particular response data relative to other response data,
wherein said processor (238) is configured to:
send a first request for data to said server (108);
process data being serially received from said server comprising a response to said first request;
send a second request for data to said server, said second request being sent with a respective relative priority that is higher than a priority of the first request;
said communications system (211) being arranged to serially receive data comprising a response to said second request, some of said data comprising a response to said second request being serially received ahead of the data comprising the response to the first request; and
said processor is further configured to process the response data for the second request; and, once processing of the response data for the second request is completed, complete processing of the response data for the first request.

21. The system of claim 20, wherein the wireless device processor (238) is configured to send a priority indication in association with a request for particular response data for any request deemed to require immediate action.

22. The system of claim 21, wherein the wireless device processor (238) is configured to increment the value of a priority indication for each subsequent requests deemed to require immediate action.

23. The system of any of claims 20 to 22, wherein said wireless device memory (224) comprises instructions to configure the wireless device processor (238) to send the priority indication in a header portion of the request.

24. The system of any of claims 20 to 23, wherein said wireless device memory (224) comprises instructions to configure the wireless device processor (238) to determine the priority of the particular response data relative to other response data.

25. The system of claim 24, wherein said instructions to configure the wireless device processor (238) to determine the priority comprise instructions to:
evaluate a first portion of a first response data to determine a second request for a second respective response data having a higher priority than a remaining portion of the first respective response data; and
define the priority indication in response to the higher priority.

26. A wireless gateway for communicating with a wireless communication device (102) coupled to the gateway (108) via a wireless network (104), the wireless communication device and wireless gateway communicating serially in accordance with a request/response protocol, the wireless gateway comprising:
a communication system for transmitting and receiving via the wireless network (104);
a processor coupled to the communication system for processing received requests and sending respective response data; and
a memory coupled to the processor for storing instructions to configure the processor to:
place data comprising a response to a first request in a send queue (410) and serially transmit the data in said send queue to the wireless device (102);
receive data comprising a response to a second request, said second request being determined to have a respective relative priority that is higher than a priority of the first request; and
place some of the data comprising the response to the second request in the send queue (410) ahead of at least some of the data comprising the response to the first request still in the queue and serially transmit the data in said send queue to the wireless device (102).

27. The wireless gateway of claim 26, wherein the gateway (108) is coupled to at least one further device (114, 116) configured for providing response data and wherein the gateway is adapted to obtain the response data from the second device in response to the received requests.

28. A server (114, 116) for communicating with a wireless communication device (102) via a wireless gateway (108) in a wireless network (104) part of a communications system (100), the wireless communication device and the wireless gateway communicating over the wireless network serially in accordance with a request/response protocol, wherein the server comprises:
a processor coupled to the communication system (100) for processing a plurality of requests from the wireless communication device (102) and sending respectives response data to said device via the gateway (108), said plurality of requests having respective relative priorities; and
a memory coupled to the processor for storing instructions to configure the processor to order a server message send queue (410) to:
place data from the server (114, 116) comprising a response to a first request in a message send queue (410) and serially transmit the data in said send queue to the wireless device (102);
receive data from the server (114, 116) comprising a response to a second request, said second request being determined to have a respective relative priority that is higher than a priority of the first request; and
place some of the data comprising the response to the second request in the send queue (410) ahead of at least some of the data comprising the response to the first request still in the queue and serially transmitting the data in said send queue to the wireless device (102).

29. A machine readable medium comprising program code means executable in one or more processors of the system of any of claims 20 to 25 for implementing the method of any of claims 12 to 19.

30. A machine readable medium comprising program code means executable in a processor of the wireless gateway of claim 26 or 27 for implementing the method of any of claims 1 to 11.

31. A machine readable medium comprising program code means executable in a processor of the server of claim 28 for implementing the method of any of claims 1 to 11.

## Patentansprüche

1. Ein Verfahren zum Ordnen einer Nachrichten-Sendewarteschlange (410) in einem Server (108), der jeweilige Antwortdaten zu einem Drahtlos-Kommunikationsgerät (102) als Antwort auf eine Vielzahl von Anforderungen vom Drahtlos-Kommunikationsgerät sendet, wobei das Verfahren die folgenden Schritte umfasst:
Platzieren der Daten, die eine Antwort auf eine erste Anforderung bilden, in der Sendewarteschlange (410) und serielles Übertragen der Daten in dieser Sendewarteschlange zu dem Drahtlos-Gerät (102);
Empfangen der Daten, die eine Antwort auf eine zweite Anforderung bilden, wobei für diese zweite Anforderung ermittelt wird, dass sie eine jeweilige relative Priorität hat, die höher ist als eine Priorität der ersten Anforderung; und
Platzieren einiger der Daten, die die Antwort auf die zweite Anforderung bilden, in der Sendewarteschlange (410) vor zumindest einigen der noch in der Warteschlange befindlichen Daten, die die Antwort auf die erste Anforderung bilden, und serielles Übertragen der Daten in der Sendewarteschlange zu dem Drahtlos-Gerät (102).

2. Das Verfahren gemäß Anspruch 1, wobei es des Weiteren die folgenden Schritte umfasst:
Empfangen der Daten, die eine Antwort auf eine dritte Anforderung bilden, wobei für diese dritte Anforderung ermittelt wird, dass sie eine jeweilige relative Priorität hat, die höher ist als die Priorität der zweiten Anforderung; und
Platzieren einiger der Daten, die die dritte Antwort bilden, in der Sendewarteschlange (410) vor zumindest einigen der noch in der Warteschlange befindlichen Daten, die die Antwort auf die zweite Anforderung bilden, und serielles Übertragen der Daten in der Warteschlange zu dem Drahtlos-Gerät (102).

3. Das Verfahren gemäß Anspruch 1 oder Anspruch 2, wobei es umfasst das periodische Platzieren einiger der Daten, die die erste Antwort bilden, vor allen Daten in der Warteschlange und serielles Übertragen der Daten in der Warteschlange zu dem Drahtlos-Gerät (102) in geordneter Reihenfolge, um eine Zeitüberschreitung einer Verbindung zwischen dem Server (108) und dem Drahtlos-Gerät (102) zu vermeiden.

4. Das Verfahren gemäß jedem der Ansprüche 1 bis 3, wobei das Ermitteln einer jeweiligen relativen Priorität das Bewerten einer Prioritätsangabe umfasst, welche die relative Priorität der Antwortdaten für die betreffende Anforderung definiert.

5. Das Verfahren gemäß jedem der Ansprüche 1 bis 4, des Weiteren umfassend das Empfangen der Vielzahl von Anforderungen, wobei mindestens einige der Anforderungen eine jeweilige Prioritätsangabe zum Ordnen des Sendens ihrer jeweiligen Antwortdaten relativ zu anderen Antwortdaten umfassen.

6. Das Verfahren gemäß jedem der Ansprüche 1 bis 5, des Weiteren umfassend das Empfangen der jeweiligen Antwortdaten zum Senden über die Nachrichten-Warteschlange (410) als Antwort auf die jeweilige Anforderung.

7. Das Verfahren gemäß jedem der Ansprüche 1 bis 6, wobei die Nachrichten-Warteschlange eine FIFO-Warteschlange (First In First Out) umfasst, und wobei das Ordnen das Platzieren der jeweiligen Antwortdaten an einem der Enden der Nachrichten-Warteschlange als Antwort auf ihre jeweiligen relativen Prioritäten umfasst.

8. Das Verfahren gemäß jedem der Ansprüche 1 bis 7, wobei der Server (108) eine Prioritätsangabe für mindestens eine der Anforderungen vom Drahtlos-Gerät (102) empfängt.

9. Das Verfahren gemäß Anspruch 8, wobei der Server (108) eine Prioritätsangabe vom Drahtlos-Gerät (102) für jede Anforderung empfängt, für die ein sofortiges Handeln als notwenig erachtet wird.

10. Das Verfahren gemäß Anspruch 9, wobei die Prioritätsangabe, die vom Server (108) für jede nachfolgende Anforderung empfangen wird, die ein sofortiges Handeln erfordert, einen Wert hat, der einen inkrementierten Wert der letzten derartigen Anforderung darstellt.

11. Das Verfahren gemäß jedem der Ansprüche 1 bis 10, wobei der Server (108) ein Drahtlos-Gateway-Server ist und wobei das Verfahren das Formatieren der Antwortdaten für die Übertragung in Übereinstimmung mit einem Drahtlos-Kommunikationsprotokoll umfasst.

12. Ein Verfahren zum Verarbeiten der jeweiligen Antwortdaten in einem System, das einen Server (108) und ein Drahtlos-Kommunikationsgerät (102) umfasst, wobei die Antwortdaten in dem Drahtlos-Kommunikationsgerät (102) vom Server (108) empfangen werden, der auf eine Vielzahl von Anforderungen vom Drahtlos-Gerät für die Daten antwortet, umfassend die folgenden Schritte:
am Drahtlos-Gerät (102), das Senden einer ersten Anforderung von Daten zum Server (108);
am Server, das Platzieren der Daten, die eine Antwort auf eine erste Anforderung bilden, in einer Nachrichten-Sendewarteschlange (410) und das serielle Übertragen der Daten in der Sendewarteschlange zu dem Drahtlos-Gerät (102);
am Drahtlos-Gerät, das Verarbeiten der empfangenen Daten, die eine Antwort auf die erste Anforderung bilden;
am Drahtlos-Gerät, das Senden einer zweiten Anforderung von Daten zum Server, wobei die zweite Anforderung mit einer jeweiligen relativen Priorität gesendet wird, die höher ist als eine Priorität der ersten Anforderung;
am Server, das Empfangen der Daten, die eine Antwort auf die zweite Anforderung bilden, wobei für diese zweite Anforderung ermittelt wird, dass sie eine jeweilige relative Priorität hat, die höher ist als eine Priorität der ersten Anforderung;
am Server, das Platzieren von einigen der Daten, die die Antwort auf die zweite Anforderung bilden, in der Sendewarteschlange (410) vor mindestens einigen der noch in der Warteschlange befindlichen Daten, die die Antwort auf die erste Anforderung bilden, und das serielle Übertragen der Daten in der Warteschlange zum dem Drahtlos-Gerät;
am Drahtlos-Gerät, das serielle Empfangen der Daten, die eine Antwort auf die zweite Anforderung bilden, wobei einige der Daten, die eine Antwort auf die zweite Anforderung bilden, seriell vor zumindest einigen der Daten empfangen werden, die die Antwort auf die erste Anforderung bilden;
am Drahtlos-Gerät, das Verarbeiten der Antwortdaten für die zweite Anforderung; und
sobald das Verarbeiten der Antwortdaten für die zweite Anforderung am Drahtlos-Gerät abgeschlossen ist, das Abschließen des Verarbeitens der Antwortdaten für die erste Anforderung.

13. Das Verfahren gemäß Anspruch 12, wobei es die folgenden Schritte umfasst:
Senden einer dritten Anforderung von Daten an den Server (108) vom Drahtlos-Gerät aus, wobei diese dritte Anforderung mit einer jeweiligen relativen Priorität gesendet wird, die höher ist als die Priorität der zweiten Anforderung;
serielles Empfangen der Daten, die eine Antwort auf die dritte Anforderung bilden, am Drahtlos-Gerät, wobei einige der Daten, die eine Antwort auf die dritte Anforderung bilden, seriell vor den Daten empfangen werden, die die Antwort auf die zweite Anforderung bilden;
Verarbeiten der Antwortdaten für die dritte Anforderung am Drahtlos-Gerät; und
sobald das Verarbeiten der Antwortdaten für die dritte Anforderung am Drahtlos-Gerät abgeschlossen ist, das Abschließen des Verarbeitens der Antwortdaten für die zweite Anforderung.

14. Das Verfahren gemäß Anspruch 12 oder Anspruch 13, wobei es das periodische Empfangen von einigen der Daten, die die erste Antwort bilden, vor den Daten, die die zweite Antwort bilden, am Drahtlos-Gerät umfasst und das Verarbeiten der periodisch empfangenen Daten in geordneter Reihenfolge, um eine Zeitüberschreitung einer Verbindung zwischen dem Server (108) und dem Drahtlos-Gerät (102) zu vermeiden.

15. Das Verfahren gemäß jedem der Ansprüche 12 bis 14, wobei das Drahtlos-Gerät (102) jeder Anforderung, für die ein sofortiges Handeln als notwenig erachtet wird, eine Prioritätsangabe zuweist.

16. Das Verfahren gemäß Anspruch 15, wobei das Drahtlos-Gerät (102) jeder nachfolgenden Anforderung, für die ein sofortiges Handeln als notwenig erachtet wird, eine Prioritätsangabe zuweist, die einen inkrementierten Wert der letzten derartigen Anforderung darstellt.

17. Das Verfahren gemäß jedem der Ansprüche 12 bis 16, wobei das Drahtlos-Gerät (102) die Prioritätsangabe in einem Kopfabschnitt der Anforderung sendet.

18. Das Verfahren gemäß jedem der Ansprüche 12 bis 17, wobei das Ermitteln einer jeweiligen relativen Priorität das Bewerten eines ersten Abschnitts der ersten Antwortdaten umfasst, um zu ermitteln, dass die zweite Anforderung für die zweiten jeweiligen Antwortdaten eine höhere Priorität haben als ein restlicher Abschnitt der ersten jeweiligen Antwortdaten, und das Definieren der jeweiligen relativen Priorität als Antwort auf die höhere Priorität.

19. Das Verfahren gemäß jedem der Ansprüche 12 bis 18, des Weiteren umfassend das Aussetzen des Verarbeitens der ersten jeweiligen Antwortdaten am Drahtlos-Gerät, bis das Verarbeiten der zweiten jeweiligen Antwortdaten abgeschlossen ist.

20. Ein System, das einen Server (108) und ein Drahtlos-Kommunikationsgerät (102) umfasst, wobei der Server mit dem Drahtlos-Kommunikationsgerät über ein Drahtlos-Gateway (108) in einem Drahtlos-Netzwerk (104) kommuniziert, das Teil eines Kommunikationssystems (100) ist, wobei das Drahtlos-Kommunikationsgerät und das Drahtlos-Gateway seriell in Übereinstimmung mit einem Anforderungs/Antwort-Protokoll kommunizieren, wobei der Server umfasst:
einen an das Kommunikationssystem (100) gekoppelten Prozessor zum Verarbeiten einer Vielzahl von Anforderungen vom Drahtlos-Kommunikationsgerät (102) und zum Senden der jeweiligen Antwortdaten zu dem Gerät über das Gateway (108), wobei die Vielzahl von Anforderungen jeweilige relative Prioritäten haben; und
einen an den Prozessor gekoppelten Speicher zum Speichern von Anweisungen zum Konfigurieren des Prozessors, um eine serverseitige Nachrichten-Sendewarteschlange (410) auf folgende Weise zu ordnen: Platzieren der Daten vom Server (114, 116), die eine Antwort auf eine erste Anforderung bilden, in der Sendewarteschlange (410) und serielles Übertragen der Daten in dieser Sendewarteschlange zu dem Drahtlos-Gerät (102);
Empfangen der Daten vom Server (114, 116), die eine Antwort auf eine zweite Anforderung bilden, wobei für diese zweite Anforderung ermittelt wird, dass sie eine jeweilige relative Priorität hat, die höher ist als eine Priorität der ersten Anforderung; und
Platzieren einiger der Daten, die die Antwort auf die zweite Anforderung bilden, in der Sendewarteschlange (410) vor zumindest einigen der noch in der Warteschlange befindlichen Daten, die die Antwort auf die erste Anforderung bilden, und serielles Übertragen der Daten in der Sendewarteschlange zu dem Drahtlos-Gerät (102), das vom Drahtlos-Kommunikationsgerät (102) gebildet wird, und
wobei das Drahtlos-Gerät umfasst:
ein Kommunikationssystem (211) zum Übertragen und Empfangen über das Drahtlosnetzwerk (104);
einen an das Kommunikationssystem (211) gekoppelten Prozessor (238) zum Senden von Anforderungen und zum Verarbeiten der jeweiligen Antwortdaten; und
einen an den Prozessor gekoppelten Speicher (224) zum Speichern von Anweisungen zum Konfigurieren des Prozessors, um eine Prioritätsangabe gemeinsam mit einer Anforderung für bestimmte Antwortdaten zu senden, um eine Priorität der bestimmten Antwortdaten relativ zu anderen Antwortdaten anzugeben,
wobei der Prozessor (238) konfiguriert ist zum:
Senden einer ersten Anforderung von Daten an den Server (108);
Verarbeiten der seriell vom Server empfangenen Daten, die eine Antwort auf die erste Anforderung bilden;
Senden einer zweiten Anforderung von Daten an den Server, wobei die zweite Anforderung mit einer jeweiligen relativen Priorität gesendet wird, die höher ist als eine Priorität der ersten Anforderung;
wobei das Kommunikationssystem (211) dafür ausgelegt ist, seriell Daten zu empfangen, die eine Antwort auf die zweite Anforderung bilden, wobei einige der Daten, die eine Antwort auf die zweite Anforderung bilden, seriell vor den Daten empfangen werden, die die Antwort auf die erste Anforderung bilden; und
wobei der Prozessor des Weiteren konfiguriert ist zum Verarbeiten der Antwortdaten für die zweite Anforderung und ― sobald das Verarbeiten der Antwortdaten für die erste Anforderung abgeschlossen ist ―, zum Abschließen des Verarbeitens der Antwortdaten für die erste Anforderung.

21. Das System gemäß Anspruch 20, wobei der Prozessor (238) des Drahtlos-Geräts konfiguriert ist zum Senden einer Prioritätsangabe gemeinsam mit einer Anforderung für bestimmte Antwortdaten für jede Anforderung, für die ein sofortiges Handeln als notwenig erachtet wird.

22. Das System gemäß Anspruch 21, wobei der Prozessor (238) des Drahtlos-Geräts konfiguriert ist zum Inkrementieren des Werts einer Prioritätsangabe für alle nachfolgenden Anforderungen, für die ein sofortiges Handeln als notwenig erachtet wird.

23. Das System gemäß jedem der Ansprüche 20 bis 22, wobei der Speicher (224) des Drahtlos-Geräts Anweisungen umfasst, um den Prozessor (238) des Drahtlos-Geräts dafür zu konfigurieren, die Prioritätsangabe in einem Kopfabschnitt der Anforderung zu senden.

24. Das System gemäß jedem der Ansprüche 20 bis 23, wobei der Speicher (224) des Drahtlos-Geräts Anweisungen umfasst, um den Prozessor (238) des Drahtlos-Geräts dafür zu konfigurieren, die Priorität der bestimmten Antwortdaten relativ zu anderen Antwortdaten zu ermitteln.

25. Das System gemäß Anspruch 24, wobei die Anweisungen zum Konfigurieren des Prozessors (238) des Drahtlos-Geräts zum Ermitteln der Priorität Anweisungen umfassen zum:
Bewerten eines ersten Abschnitts von ersten Antwortdaten zum Ermitteln, ob eine zweite Anforderung für zweite jeweilige Antwortdaten eine höhere Priorität hat als ein restlicher Abschnitt der ersten jeweiligen Antwortdaten; und
Definieren der Prioritätsangabe als Antwort auf die höhere Priorität.

26. Ein Drahtlos-Gateway zum Kommunizieren mit einem Drahtlos-Kommunikationsgerät (102, das über ein Drahtlos-Netzwerk (104) mit dem Gateway (108) gekoppelt ist, wobei das Drahtlos-Kommunikationsgerät und das Drahtlos-Gateway seriell in Übereinstimmung mit einem Anforderungs/Antwort-Protokoll kommunizieren, wobei das Drahtlos-Gateway umfasst:
ein Kommunikationssystem zum Übertragen und Empfangen über das Drahtlos-Netzwerk (104);
einen an das Kommunikationssystem gekoppelten Prozessor zum Verarbeiten der empfangenen Anforderungen und zum Senden der jeweiligen Antwortdaten; und
einen an den Prozessor gekoppelten Speicher zum Speichern von Anweisungen zum Konfigurieren des Prozessors zum:
Platzieren der Daten, die eine Antwort auf eine erste Anforderung bilden, in einer Sendewarteschlange (410) und serielles Übertragen der Daten in dieser Sendewarteschlange zu dem Drahtlos-Gerät (102);
Empfangen der Daten, die eine Antwort auf eine zweite Anforderung bilden, wobei für diese zweite Anforderung ermittelt wird, dass sie eine jeweilige relative Priorität hat, die höher ist als eine Priorität der ersten Anforderung; und
Platzieren einiger der Daten, die die Antwort auf die zweite Anforderung bilden, in der Sendewarteschlange (410) vor zumindest einigen der noch in der Warteschlange befindlichen Daten, die die Antwort auf die erste Anforderung bilden, und serielles Übertragen der Daten in der Sendewarteschlange zu dem Drahtlos-Gerät (102).

27. Das Drahtlos-Gateway gemäß Anspruch 26, wobei das Gateway (108) mit mindestens einem weiteren Gerät (114, 116) gekoppelt ist, das zum Bereitstellen von Antwortdaten konfiguriert ist, und wobei das Gateway dazu ausgelegt ist, die Antwortdaten von dem zweiten Gerät als Antwort auf die empfangenen Anforderungen zu erlangen.

28. Ein Server (114, 116) zum Kommunizieren mit einem Drahtlos-Kommunikationsgerät (102) über ein Drahtlos-Gateway (108) in einem Drahtlos-Netzwerk (104), das Teil eines Kommunikationssystems (100) ist, wobei das Drahtlos-Kommunikationsgerät und das Drahtlos-Gateway über das Drahtlos-Netzwerk seriell in Übereinstimmung mit einem Anforderungs/Antwort-Protokoll kommunizieren, wobei der Server umfasst:
einen an das Kommunikationssystem (100) gekoppelten Prozessor zum Verarbeiten einer Vielzahl von Anforderungen vom Drahtlos-Kommunikationsgerät (102) und zum Senden der jeweiligen Antwortdaten zu dem Gerät über das Gateway (108), wobei die Vielzahl von Anforderungen jeweilige relative Prioritäten haben; und
einen an den Prozessor gekoppelten Speicher zum Speichern von Anweisungen zum Konfigurieren des Prozessors, um eine serverseitige Nachrichten-Sendewarteschlange (410) wie folgt zu ordnen:
Platzieren der Daten vom Server (114, 116), die eine Antwort auf eine erste Anforderung bilden, in der Nachrichten-Sendewarteschlange (410) und serielles Übertragen der Daten in dieser Sendewarteschlange zu dem Drahtlos-Gerät (102);
Empfangen der Daten vom Server (114, 116), die eine Antwort auf eine zweite Anforderung bilden, wobei für diese zweite Anforderung ermittelt wird, dass sie eine jeweilige relative Priorität hat, die höher ist als eine Priorität der ersten Anforderung; und
Platzieren einiger der Daten, die die Antwort auf die zweite Anforderung bilden, in der Sendewarteschlange (410) vor zumindest einigen der noch in der Warteschlange befindlichen Daten, die die Antwort auf die erste Anforderung bilden, und serielles Übertragen der Daten in der Sendewarteschlange zu dem Drahtlos-Gerät (102).

29. Ein maschinenlesbares Medium, umfassend Programmcode-Mittel, die in einem oder mehreren Prozessoren des Systems gemäß jedem der Ansprüche 20 bis 25 ausgeführt werden können, um das Verfahren gemäß jedem der Ansprüche 12 bis 19 zu implementieren.

30. Ein maschinenlesbares Medium, umfassend Programmcode-Mittel, die in einem Prozessor des Drahtlos-Gateways gemäß Anspruch 26 oder 27 ausgeführt werden können, um das Verfahren gemäß jedem der Ansprüche 1 bis 11 zu implementieren.

31. Ein maschinenlesbares Medium, umfassend Programmcode-Mittel, die in einem Prozessor des Servers gemäß Anspruch 28 ausgeführt werden können, um das Verfahren gemäß jedem der Ansprüche 1 bis 11 zu implementieren.

## Revendications

1. Méthode pour ordonner une file d'attente d'envoi de messages (410) dans un serveur (108) envoyant des données de réponses respectives à un dispositif de communication sans fil (102) en réponse à une pluralité de demandes venant du dispositif de communication sans fil, la méthode mettant en jeu les étapes suivantes :
placer des données constituant une réponse à une première demande dans la file d'attente d'envoi (410) et transmettre en série les données dans ladite file d'attente d'envoi au dispositif sans fil (102) ;
recevoir des données constituant une réponse à une deuxième demande, ladite deuxième demande étant déterminée comme ayant une priorité relative respective supérieure à une priorité de la première demande ; et
placer une partie des données constituant la réponse à la deuxième demande dans la file d'attente d'envoi (410) avant au moins une partie des données constituant la réponse à la première demande encore dans la file d'attente et transmettre en série les données dans ladite file d'attente d'envoi au dispositif sans fil (102).

2. La méthode de la revendication 1, mettant en jeu les étapes suivantes :
recevoir des données constituant une réponse à une troisième demande, ladite troisième demande étant déterminée comme ayant une priorité relative respective supérieure à une priorité de la deuxième demande ; et
placer une partie des données constituant la troisième réponse dans la file d'attente d'envoi (410) avant au moins une partie des données constituant la réponse à la deuxième demande encore dans la file d'attente et transmettre en série les données dans la file d'attente d'envoi au dispositif sans fil (102).

3. La méthode de la revendication 1 ou 2 mettant en jeu périodiquement le placement d'une partie des données constituant la première réponse avant toute donnée dans la file d'attente et la transmission en série des données dans la file d'attente d'envoi au dispositif sans fil (102) afin d'éviter un dépassement de délai sur une connexion entre le serveur (108) et le dispositif sans fil (102).

4. La méthode de l'une quelconque des revendications 1 à 3, dans le cadre de laquelle la détermination d'une priorité relative respective met en jeu l'évaluation d'une indication de priorité d'une demande, ladite indication de priorité définissant la priorité relative des données de réponse pour cette demande.

5. La méthode de l'une quelconque des revendications 1 à 4 mettant par ailleurs en jeu la réception de ladite pluralité de demandes, au moins une partie desdites demandes constituant une indication de priorité respective pour ordonner l'envoi des données de réponses respectives relatives aux autres données de réponses.

6. La méthode de l'une quelconque des revendications 1 à 5 mettant par ailleurs en jeu la réception des données de réponses respectives à envoyer via ladite file d'attente de messages (410) en réponse à la demande respective.

7. La méthode de l'une quelconque des revendications 1 à 6, dans le cadre de laquelle la file d'attente de messages est constituée d'une file d'attente « Premier Entré Premier Sorti » (FIFO) et dans le cadre de laquelle l'ordonnancement met en jeu le placement des données de réponses respectives à une des extrémités de la file d'attente de messages en réponse aux priorités relatives respectives.

8. La méthode de l'une quelconque des revendications 1 à 7, dans le cadre de laquelle le serveur (108) reçoit une indication de priorité pour au moins une des demandes venant du dispositif sans fil (102).

9. La méthode de la revendication 8, dans le cadre de laquelle le serveur (108) reçoit une indication de priorité du dispositif sans fil (102) pour toute demande considérée comme exigeant une action immédiate.

10. La méthode de la revendication 9, dans le cadre de laquelle l'indication de priorité reçue par le serveur (108) pour chaque demande ultérieure exigeant une action immédiate a une valeur comportant une valeur incrémentée d'une dernière demande de ce type.

11. La méthode de l'une quelconque des revendications 1 à 10, dans le cadre de laquelle le serveur (108) est un serveur de passerelle sans fil, mettant en jeu la mise en forme des données de réponses à transmettre conformément à un protocole de communications sans fil.

12. Une méthode pour traiter les données de réponses respectives dans un système constitué d'un serveur (108) et d'un dispositif sans fil (102), les données de réponse étant reçues sur le dispositif de communication sans fil (102) à partir du serveur (108) en réponse à une pluralité de demandes, venant du dispositif sans fil, de ces données, mettant en jeu les étapes suivantes :
au niveau du dispositif sans fil (102), envoyer une première demande de données audit serveur (108) ;
au niveau du serveur, placer les données constituant une réponse à une première demande dans une file d'attente d'envoi de messages (410) et
transmettre en série les données dans ladite file d'attente d'envoi au dispositif sans fil (102) ;
au niveau du dispositif sans fil, traiter les données reçues, ledit traitement mettant en jeu une réponse à ladite première demande ;
au niveau du dispositif sans fil, envoyer une deuxième demande de données audit serveur ; ladite deuxième demande étant envoyée avec une priorité relative respective supérieure à une priorité de la première demande ;
au niveau du serveur, recevoir des données constituant une réponse à la deuxième demande, ladite deuxième demande étant déterminée comme ayant une priorité relative respective supérieure à une priorité de la première demande ;
au niveau du serveur, placer une partie des données constituant la réponse à la deuxième demande dans la file d'attente d'envoi (410) avant au moins une partie des données constituant la réponse à la première demande encore dans la file d'attente et transmettre en série les données dans ladite file d'attente d'envoi au dispositif sans fil ;
au niveau du dispositif sans fil, recevoir en série des données constituant une réponse à ladite deuxième demande, une partie desdites données constituant une réponse à ladite deuxième demande reçue en série avant au moins une partie des données constituant la réponse à la première demande ;
au niveau du dispositif sans fil, traiter les données de réponses pour la deuxième demande ; et, une fois le traitement des données de réponses pour la deuxième demande terminé au niveau du dispositif sans fil, terminer le traitement des données de réponse pour la première demande.

13. La méthode de la revendication 12, mettant en jeu les étapes suivantes :
envoyer une troisième demande de données audit serveur (108) à partir du dispositif sans fil ; ladite troisième demande étant envoyée avec une priorité relative respective supérieure à la priorité de la deuxième demande ;
recevoir en série des données constituant une réponse à ladite troisième demande au niveau dudit dispositif sans fil, une partie desdites données constituant une réponse à ladite troisième demande étant reçue en série avant les données constituant la réponse à la deuxième demande ;
traiter les données de réponses pour la troisième demande au niveau du dispositif sans fil ; et, une fois le traitement des données de réponses pour la troisième demande terminé au niveau du dispositif sans fil, terminer le traitement des données de réponse pour la deuxième demande.

14. La méthode de la revendication 12 ou 13 mettant en jeu la réception périodique d'une partie des données constituant la première réponse avant les données constituant la deuxième réponse au niveau du dispositif sans fil et traitant lesdites données reçues périodiquement afin d'éviter un dépassement de délai sur une connexion entre le serveur (108) et le dispositif sans fil (102).

15. La méthode de l'une quelconque des revendications 12 à 14, dans le cadre de laquelle le dispositif sans fil (102) attribue une indication de priorité à toute demande considérée comme exigeant une action immédiate.

16. La méthode de la revendication 15, dans le cadre de laquelle le dispositif sans fil (102) attribue à chaque demande ultérieure considérée comme exigeant une action immédiate une indication de priorité comportant une valeur incrémentée d'une dernière demande de ce type.

17. La méthode de l'une quelconque des revendications 12 à 16, dans le cadre de laquelle le dispositif sans fil (102) envoie l'indication de priorité dans une partie d'en-tête de la demande.

18. La méthode de l'une quelconque des revendications 12 à 17, dans le cadre de laquelle la détermination d'une priorité relative respective met en jeu l'évaluation d'une première partie des premières données de réponses, afin de déterminer la deuxième demande de deuxièmes données de réponses respectives ayant une priorité supérieure à la partie restante des premières données de réponses respectives et de définir la priorité relative respective en réponse à la priorité supérieure.

19. La méthode de l'une quelconque des revendications 12 à 18, mettant par ailleurs en jeu la suspension du traitement desdites premières données de réponses respectives au niveau du dispositif sans fil jusqu'à ce que le traitement des deuxièmes données de réponses respectives soit terminé.

20. Un système constitué d'un serveur (108) et d'un dispositif de communication sans fil (102), le serveur communiquant avec le dispositif de communication sans fil via une passerelle sans fil (108) au sein d'un réseau sans fil (104) faisant partie d'un système de communication (100), le dispositif de communication sans fil et la passerelle sans fil communiquant en série conformément à un protocole de demande/réponse, ledit serveur comportant :
un processeur couplé au système de communication (100) pour traiter une pluralité de demandes venant du dispositif de communication sans fil (102) et pour envoyer des données de réponses respectives audit dispositif via la passerelle (108), ladite pluralité de demandes ayant des priorités relatives respectives ; et
une mémoire couplée au processeur pour contenir des instructions servant à configurer le processeur de façon qu'il ordonne une file d'attente d'envoi de messages sur serveur (410), le but étant de :
placer les données venant du serveur (114, 116) constituant une réponse à une première demande dans la file d'attente d'envoi et transmettre en série les données dans ladite file d'attente d'envoi au dispositif sans fil (102) ;
recevoir les données venant du serveur (114, 116) constituant une réponse à une deuxième demande, ladite deuxième demande étant déterminée comme ayant une priorité relative respective supérieure à une priorité de la première demande ; et
placer une partie des données constituant la réponse à la deuxième demande dans la file d'attente d'envoi (410) avant au moins une partie des données constituant la réponse à la première demande encore dans la file d'attente et transmettre en série les données dans ladite file d'attente d'envoi au dispositif sans fil (102).
Ledit dispositif sans fil comportant :
un système de communication (211) pour transmettre et recevoir via le réseau sans fil (104) ;
un processeur (238) couplé au système de communication (211) pour envoyer des demandes et traiter des données de réponses respectives ; et
une mémoire (224) couplée au processeur et contenant des instructions servant à configurer le processeur de façon qu'il envoie une indication de priorité en association avec une demande de données de réponses particulières, le but étant d'indiquer une priorité des données de réponses particulières par rapport aux autres données de réponses,
ledit processeur (238) étant configuré pour :
envoyer une première demande de données audit serveur (108) ;
traiter les données reçues en série à partir dudit serveur mettant en jeu une réponse à ladite première demande ;
envoyer une deuxième demande de données audit serveur, ladite deuxième demande étant envoyée avec une priorité relative respective supérieure à une priorité de la première demande ;
ledit système de communication (211) étant agencé pour recevoir en série des données constituant une réponse à ladite deuxième demande, une partie desdites données constituant une réponse à ladite deuxième demande étant reçue en série avant les données constituant la réponse à la première demande ; et
ledit processeur est en outre configuré pour traiter les données de réponse pour la deuxième demande ; et, une fois le traitement des données de réponses pour la deuxième demande terminé, terminer le traitement des données de réponse pour la première demande.

21. Le système de la revendication 20, dans le cadre duquel le processeur du dispositif sans fil (238) est configuré pour envoyer une indication de priorité en association avec une demande de données de réponse particulière pour toute demande considérée comme exigeant une action immédiate.

22. Le système de la revendication 21, dans le cadre duquel le processeur du dispositif sans fil (238) est configuré de façon à incrémenter la valeur d'une indication de priorité pour toutes les demandes ultérieures considérées comme exigeant une action immédiate.

23. Le système de l'une quelconque des revendications 20 à 22, dans le cadre duquel la mémoire du dispositif sans fil (224) contient des instructions servant à configurer le processeur du dispositif sans fil (238) de façon qu'il envoie l'indication de priorité dans une partie d'en-tête de la demande.

24. Le système de l'une quelconque des revendications 20 à 23, dans le cadre duquel la mémoire du dispositif sans fil (224) contient des instructions servant à configurer le processeur du dispositif sans fil (238) de façon qu'il détermine la priorité des données de réponses particulières par rapport aux autres données de réponses.

25. Le système de la revendication 24, dans le cadre duquel lesdites instructions, qui servent à configurer le processeur du dispositif sans fil (238) de façon qu'il détermine la priorité, comportent des instructions pour :
évaluer une première partie de premières données de réponses afin de déterminer une deuxième demande de deuxièmes données de réponses respectives ayant une priorité supérieure à la partie restante des premières données de réponses respectives ; et pour
définir l'indication de priorité en réponse à la priorité supérieure.

26. Une passerelle sans fil pour communiquer avec un dispositif de communication sans fil (102) couplé à la passerelle (108) via un réseau sans fil (104), le dispositif de communication sans fil et la passerelle sans fil communiquant en série conformément à un protocole de demande/réponse, la passerelle sans fil comportant :
un système de communication servant à transmettre et recevoir via le réseau sans fil (104) ;
un processeur couplé au système de communication servant à traiter les demandes reçues et à envoyer les données de réponse respectives ; et
une mémoire couplée au processeur contenant des instructions servant à configurer le processeur pour :
placer les données constituant une réponse à une première demande dans une file d'attente d'envoi (410) et transmettre en série les données dans ladite file d'attente d'envoi au dispositif sans fil (102) ;
recevoir les données constituant une réponse à une deuxième demande, ladite deuxième demande étant déterminée comme ayant une priorité relative respective supérieure à une priorité de la première demande ; et
placer une partie des données constituant la réponse à la deuxième demande dans la file d'attente d'envoi (410) avant au moins une partie des données constituant la réponse à la première demande encore dans la file d'attente et
transmettre en série les données dans ladite file d'attente d'envoi au dispositif sans fil (102).

27. La passerelle sans fil de la revendication 26, étant couplée à au moins un autre dispositif (114, 116) configuré pour fournir les données de réponses et étant adaptée pour obtenir les données de réponses venant du deuxième dispositif en réponse aux demandes reçues.

28. Un serveur (114, 116) servant à communiquer avec un dispositif de communication sans fil (102) via une passerelle sans fil (108) au sein d'un réseau sans fil (104) faisant partie d'un système de communication (100), le dispositif de communication sans fil et la passerelle sans fil communiquant en série par le réseau sans fil conformément à un protocole de demande/réponse, ledit serveur comportant :
un processeur couplé au système de communication (100) pour traiter une pluralité de demandes à partir du dispositif de communication sans fil (102) et pour envoyer des données de réponses respectives audit dispositif via la passerelle (108), ladite pluralité de demandes ayant des priorités relatives respectives ; et
une mémoire couplée au processeur pour contenir des instructions servant à configurer le processeur de façon qu'il ordonne une file d'attente d'envoi de messages sur serveur (410), le but étant de :
placer les données venant du serveur (114, 116) constituant une réponse à une première demande dans une file d'attente d'envoi de message (410) et
transmettre en série les données dans ladite file d'attente d'envoi au dispositif sans fil (102) ;
recevoir des données du serveur (114, 116) constituant une réponse à une deuxième demande, ladite deuxième demande étant déterminée comme ayant une priorité relative respective supérieure à la priorité de la première demande ; et
placer une partie des données constituant la réponse à la deuxième demande dans la file d'attente d'envoi (410) avant au moins une partie des données constituant la réponse à la première demande encore dans la file d'attente et
transmettre en série les données dans ladite file d'attente d'envoi au dispositif sans fil (102).

29. Un support lisible par machine contenant le moyen de code programme exécutable sur un ou plusieurs processeur(s) du système de l'une quelconque des revendications 20 à 25 afin de mettre en oeuvre la méthode de l'une quelconque des revendications 12 à 19.

30. Un support lisible par machine contenant le moyen de code programme exécutable sur un processeur de la passerelle sans fil de la revendication 26 ou 27 afin de mettre en oeuvre la méthode de l'une quelconque des revendications 1 à 11.

31. Un support lisible par machine contenant le moyen de code programme exécutable sur un processeur du serveur de la revendication 28 afin de mettre en oeuvre la méthode de l'une quelconque des revendications 1 à 11.
